# EUROPÄISCHE PATENTSCHRIFT

(11) **EP 1 425 333 B1**
(45) Veröffentlichungstag und Bekanntmachung des Hinweises auf die Patenterteilung: **22.06.2005**
(21) Anmeldenummer: 02754999.7
(22) Anmeldetag: 19.08.2002
(51) Int. Cl.: C08G 65/26, B01J 27/26

(54) **DOPPELMETALLCYANID-KATALYSATOREN FÜR DIE HERSTELLUNG VON POLYETHERPOLYOLEN**
DOUBLE METAL CYANIDE CATALYSTS FOR PRODUCING POLYETHER POLYOLS
CATALYSEURS AU CYANURE BIMETALLIQUE POUR PRODUIRE DES POLYOLS DE POLYETHER

(30) Priorität: 31.08.2001 DE 10142746
(43) Veröffentlichungstag der Anmeldung: 09.06.2004
(73) Patentinhaber: Bayer MaterialScience AG, 51368 Leverkusen (DE)
(72) Erfinder: SCHÄFER, Walter, 42799 Leichlingen (DE); HOFMANN, Jörg, 47829 Krefeld (DE); OOMS, Pieter, 47800 Krefeld (DE)
(86) Internationale Anmeldenummer: PCT/EP2002/009245
(87) Internationale Veröffentlichungsnummer: WO 2003/020796

(56) Entgegenhaltungen:
- EP-A- 0 700 949
- EP-A- 1 029 871

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ x ZnCl₂ yH₂O z Glyme

erhalten (siehe z.B. EP-A 700 949).

Aus JP-A 4 145 123, US-A 5 470 813, EP-A 700.949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Es wurde jetzt gefunden, dass DMC-Katalysatoren, die Coronanden als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) mindestens eine Doppelmetallcyanid-Verbindung,
b) mindestens einen organischen Komplexliganden, der kein Coronand ist, und
c) mindestens einen Kronenether.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich, und bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmeiallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Fonnel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin M wie in Formel (I) und
M' wie in Formel (II) definiert ist, und
x, x', y und z ganzzahlig und so gewählt sind, dass die Elektronenneutralität der Doppelmetallcyanidverbindung gegeben ist

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Kronenether werden als komponente c) eingesetzt. Diese enthalten bevorzugt im Ringsystem 3 bis 20 Sauerstoff atome, wobei zwei benachbarte Sauerstoffatomen jeweils verbunden sind durch eine Brücke mit einer Länge von 2 bis 6 Kohlenstoffatomen. An das zentrale Ringsystem des Kronenethers können aliphatische oder aromatische Ringe ankondensiert sein; weiterhin können die Kronenether zusätzlich funktionelle Gruppen wie Amino-, Hydroxy-, Carboxy- oder Nitrogruppen aufweisen.

Beispiele für unsubstituierte Kronenether sind [12]Krone-4 (1,4,7,10-Tetraoxacyclododecan), [15]Krone-5 (1,4,7,10,13-Pentaoxacylcopentadecan), [18]Krone-6 (1,4,7,10,13,16-Hexaaoxacylcooctadecan), [21]Krone-7 (1,4,7,10,13,16,19-Heptaoxacylcoheneicosan) oder [24]Krone-8 (1,4,7,10,13,16,19,22-Octaoxacylcotetraeicosan). Beispiele für Kronenether mit ankondensierten Ringsystemen sind Benzo[15]krone-5, Dibenzo[18]krone-6, Dicyclohexano[18]krone-6 oder Dibenzo[30]krone-10. Beispiele für Kronenether mit zusätzlichen funktionellen Gruppen sind 2-Hydroxymethyl[12]krone-4, 2-Hydroxymethyl[18]krone-6, [18]Krone-6-2,3,11,12-tetracarbonsäure, 4-Aminodibenzo[18]krone-6, 2-Aminomethyl[15]Krone-5, 4-Formylbenzo[15]krone-5, 4-Nitrobenzo[18]krone-6 oder Perfluoro[15]krone-5. Weitere Beispiele finden sich in J. Chem. Soc. 89 (1967) 7017, Angew. Chem. 84 (1972) 16 oder G.W. Gokel, S.J. Korzeniowski (Hrsg,) "Macrocyclic Polyether Synthesis", Springer, Berlin, Heidelberg, New York 1982.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, mindestens eines Kronenethers c).

Die Analyse der Katalysatorzusammensetzung erfolgt üblicherweise mittels Elementaranalyse, Thermogravimetrie oder extraktiver Entfernung des Anteils der ionischen oberflächen- bzw. grenzflächenaktiven Verbindung mit anschliessender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren enthaltend
a) Zinkhexacyanocobaltat (III),
b) tert.-Butanol und
c) einen Kronenether.

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II), β) organischen Komplexliganden b), die keine Coronanden sind, und γ) mindestens einem Kronenether c).

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wäßrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Gewöhnlich wird der organische Komplexligand im Überschuß eingesetzt. Es hat sich als vorteilhaft erwiesen, die wäßrigen Lösungen und den organischen Komplexliganden b) unter starkem Rühren zu vermischen. Die gebildete Suspension wird üblicherweise anschließend mit Komponente c) behandelt. Die Komponente c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wäßrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt beträgt der Anteil des organischen Komplexliganden b) in der wäßrigen Waschlösung 20 bis 80 Gew.-%, bezogen auf die Gesamtlösung. Weiterhin ist es vorteilhaft, der wäßrigen Waschlösung eine kleine Menge der als Komponente γ) eingesetzten Kronenether c) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwäßrige Lösungen zu verwenden, z.B. eine Mischung aus organischem Komplexliganden und der als Komponente γ) eingesetzten Kronenether c).

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2.000 und 1 bis 8 Hydroxylgruppen eingesetzt. Beispielsweise werden genannt: Ethylenglykol, Als aktive Wasserstoffatome aufweisende Starterverbindungen werden vorzugsweise Verbindungen mit (zahlenmittleren) Molekulargewichten von 18 bis 2.000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2.000.

Die durch die erfindungsgemäßen Katalysatoren katalysierte Polyaddition von Alkylenoxiden an aktive Wasserstoffatome aufweisende Starterverbindungen erfolgt im Allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im Allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1.000 bis 50.000 g/mol, besonders bevorzugt im Bereich von 2.000 bis 20.000 g/mol.

Die Polyaddition kann kontinuierlich oder diskontinuierlich, z.B. in einem Batch- oder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflußt werden.

### Beispiele

### Beispiel 1 DMC-Katalysator mit cis-Dicyclohexano[18]krone-6

Zu einer Mischung von 15 ml einer wässrigen 11,8 gew.-%igen Zinkchloridlösung, 13 ml tert.-Butanol und 0,4 g cis-Dicyclohexano[18]krone-6 wurden unter starkem Rühren 9 ml einer wässrigen 7,4 gew.-%igen Kaliumhexacyanocobaltat-Lösung gegeben. Das gebildete Präzipitat wurde mit einer Mischung aus 10 ml tert.-Butanol und 30 ml Wasser gewaschen und abfiltriert. Der Filterrückstand wurde anschließend mit 20 ml tert.-Butanol versetzt und erneut filtriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 12,9 Gew.-%, Zink = 25,7 Gew.-%, tert.-Butanol = 6,0 Gew.-%, cis-Dicyclohexano[18]krone-6 = 14,6 Gew.-%

### Beispiel 2 DMC-Katalysator mit cis-Dicyclohexano[18]krone-6

Zu einer Mischung von 15 ml einer wässrigen 11,8 gew.-%igen Zinkchloridlösung, 13 ml tert.-Butanol, 1 ml 12 gew.-%iger Essigsäure und 0,4 g cis-Dicyclohexano[18]krone-6 wurden unter starkem Rühren 9 ml einer wässrigen 7,4 gew.-%igen Kaliumhexacyanocobaltat-Lösung gegeben. Das gebildete Präzipitat wurde mit einer Mischung aus 10 ml tert.-Butanol und 30 ml Wasser gewaschen und abfiltriert. Der Filterrückstand wurde anschließend mit 20 ml tert.-Butanol versetzt und erneut filtriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 10,4 Gew.-%, Zink = 25,3 Gew.-%, tert.-Butanol = 4,8 Gew.-%, cis-Dicyclohexano[18]krone-6 = 24,2 Gew.-%

### Beispiel 3 DMC-Katalysator mit cis-Dicyclohexano[18]krone-6

Zu einer Mischung von 15 ml einer wässrigen 11,8 gew.-%igen Zinkchloridlösung, 13 ml tert.-Butanol, 1 ml 12 gew.-%iger Essigsäure und 0,4 g cis-Dicyclohexano[18]krone-6 wurden unter starkem Rühren 26,1 ml einer wässrigen 1,84%igen Hexacyanocobaltsäure-Lösung gegeben. Das gebildete Präzipitat wurde mit einer Mischung aus 10 ml tert.-Butanol und 30 ml Wasser gewaschen und abfiltriert. Der Filterrückstand wurde anschließend mit 20 ml tert.-Butanol versetzt und erneut filtriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 10,5 Gew.-%, Zink = 19,7 Gew.-%, tert.-Butanol = 4,9 Gew.-%, cis-Dicyclohexano[18]krone-6 = 15,2 Gew.-%

### Beispiel 4 DMC-Katalysator mit cis-Dicyclohexano[24]Krone-8

Zu einer Mischung von 15 ml einer wässrigen 11,8 gew.-%igen Zinkchloridlösung, 13 ml tert.-Butanol und 0,4 g cis-Dicyclohexano[24]Krone-8 wurden unter starkem Rühren 6 ml einer wässrigen 7,4 gew.-%igen Kaliumhexacyanocobaltat-Lösung und 5 ml einer wässrigen 4,8 gew.-%igen Kaliumhexacyanoferrat(III)-Lösung gegeben. Das gebildete Präzipitat wurde mit einer Mischung aus 10 ml tert.-Butanol und 30 ml Wasser gewaschen und abfiltriert. Der Filterrückstand wurde anschließend mit 20 ml tert.-Butanol versetzt und erneut nitriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 7,3 Gew.-%, Eisen = 3,7 Gew.-%, Zink = 25,5 Gew.-%, tert.-Butanol = 5,2 Gew.-%, cis-Dicyclohexano[24]Krone-8 = 21,7 Gew.-%

### Beispiel 5 DMC-Katalysator mit cis-Dicyclohexano[18]krone-6

Zu einer Mischung von 15 ml einer wässrigen 11,8 gew.-%igen Zinkchloridlösung, 13 ml tert.-Butanol und 0,4 g cis-Dicyclohexano[18]krone-6 wurden unter starkem Rühren 4,5 ml einer wässrigen 7,4 gew.-%igen Kaliumhexacyanocobaltat-Lösung und 5 ml einer wässrigen 7,2 gew.-%igen Kaliumhexacyanoferrat(III)-Lösung gegeben. Das gebildete Präzipitat wurde mit 30 ml Wasser gewaschen und abfiltriert. Der Filterrückstand wurde anschließend mit 20 ml tert.-Butanol versetzt und erneut filtriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 6,2 Gew.-%, Zink = 25,9 Gew.-%, Eisen = 5,9 Gew.-%, tert.-Butanol = 5,9 Gew.-%, cis-Dicyclohexano[18]krone-6 = 16,7 Gew.-%

### Beispiel 6 DMC-Katalysator mit [18]Krone-6

Zu einer Mischung von 28 ml einer wässrigen 12,7 gew.-%igen Zinkchloridlösung, 13 ml tert-Butanol, 1 ml 12 gew.-%iger Essigsäure und 0,4 g [18]Krone-6 wurden unter starkem Rühren 9 ml einer wässrigen 7,4 gew.-%igen Kaliumhexacyanocobaltat-Lösung gegeben. Das gebildete Präzipitat wurde mit 30 ml Wasser gewaschen und abfiltriert. Der Filterrückstand wurde anschließend mit 20 ml tert.-Butanol versetzt und erneut filtriert. Nach Filtration wurde der Katalysator bei 100°C unter vermindertem Druck (10 mbar) bis zur Gewichtskonstanz getrocknet.

### Elementaranalyse, Thermogravimetrische Analyse und Extraktion:

Cobalt = 11,0 Gew.-%, Zink = 26,2 Gew.-%, tert.-Butanol = 6,2 Gew.-%, [18]Krone-6 = 15,1 Gew.-%

### Beispiel 7 DMC-Katalysator mit [15]Krone-5

Zu einer Mischung von 28 ml einer wässrigen 12,7 gew.-%igen Zinkchloridlösung, 13 ml tert.-Butanol, 1 ml 12 gew.-%iger Essigsäure und 0,4 g [15]Krone-5 wurden unter starkem Rühren 27 ml einer wässrigen 1,79 gew.-%igen Hexacyanocobaltsäure-Lösung gegeben. Das gebildete Präzipitat wurde mit 30 ml Wasser gewaschen und abfiltriert. Der Filterrückstand wurde anschließend mit 20 ml tert.-Butanol versetzt und erneut filtriert. Nach Filtration wurde der Katalysator bei 100°C unter vermindertem Druck (10 mbar) bis zur Gewichtskonstanz getrocknet.

### Elementaranalyse, Thermogravimetrische Analyse und Extraktion:

Cobalt = 10,7 Gew.-%, Zink = 23,3 Gew.-%, tert.-Butanol = 5,0 Gew.-%, [15]Krone-5 = 11,4 Gew.-%

### Beispiel 8 DMC-Katalysator mit 2-Hydroxymethyl[18]Krone-6

Zu einer Mischung von 14 ml einer wässrigen 12,7 gew.-%igen Zinkchloridlösung, 13 ml tert.-Butanol und 0,4 g 2-Hydroxymethyl[18]Krone-6 wurden unter starkem Rühren 9 ml einer wässrigen 7,4 gew.-%igen Kaliumhexacyanocobaltat-Lösung gegeben. Das gebildete Präzipitat wurde mit 30 ml Wasser gewaschen und abfiltriert. Der Filterrückstand wurde anschließend mit 20 ml tert.-Butanol versetzt und erneut filtriert. Nach Filtration wurde der Katalysator bei 100°C unter vermindertem Druck (10 mbar) bis zur Gewichtskonstanz getrocknet.

### Elementaranalyse, Thermogravimetrische Analyse und Extraktion:

Cobalt = 10,4 Gew.-%, Zink = 24,7 Gew.-%, tert.-Butanol = 5,8 Gew.-%, 2-Hydroxymethyl[18]Krone-6 = 12,4 Gew.-%

### Beispiel 9 DMC-Katalysator mit 2-Hydroxymethyl[18]Krone-6

Zu einer Mischung von 14 ml einer wässrigen 12,7 gew.-%igen Zinkchloridlösung, 13 ml tert.-Butanol, 1 ml 12 gew.-%iger Essigsäure und 0,4 g 2-Hydroxymethyl[18]Krone-6 wurden unter starkem Rühren 27 ml einer wässrigen 1,79 gew.-%igen Hexacyanocobaltsäure-Lösung gegeben. Das gebildete Präzipitat wurde mit 30 ml Wasser gewaschen und abfiltriert. Der Filterrückstand wurde anschließend mit 20 ml tert.-Butanol versetzt und erneut filtriert. Nach Filtration wurde der Katalysator bei 100°C unter vermindertem Druck (10 mbar) bis zur Gewichtskonstanz getrocknet.

### Elementaranalyse, Thermogravimetrische Analyse und Extraktion:

Cobalt = 10,1 Gew.-%, Zink = 20,2 Gew.-%, tert.-Butanol = 4,2 Gew.-%, 2-Hydroxymethyl[18]Krone-6 = 13,4 Gew.-%

### Vergleichsbeispiel 10 DMC-Katalysator ohne Coronand

Zu einer Mischung von 15 ml einer wässrigen 11,8 gew.-%igen Zinkchloridlösung und 13 ml tert.-Butanol wurden unter starkem Rühren 9 ml einer wässrigen 7,4 gew.-%igen Kaliumhexacyanocobaltat-Lösung gegeben. Das gebildete Präzipitat wurde mit 10 ml tert.-Butanol gewaschen und abfiltriert. Der Filterrückstand wurde anschließend mit 20 ml tert.-Butanol versetzt und erneut filtriert. Nach Filtration wurde der Katalysator bei 50°C unter vermindertem Druck (10 mbar) bis zur Gewichtskonstanz getrocknet.

### Elementaranalyse, Thermogravimetrische Analyse und Extraktion:

Cobalt = 15,7 Gew.-%, Zink = 27,8 Gew.-%, tert.-Butanol = 7,9 Gew.-%

### Herstellung von Polyetherpolyolen

### Allgemeine Durchführung

Zur Bestimmung der Aktivität der Katalysatoren wurden in einem 500 ml Druckreaktor 50 g Polypropylenglykol-Starter (MG = 1000 g/mol) und 20 mg Katalysator unter Schutzgas (Argon) vorgelegt und unter Rühren auf 130°C aufgeheizt.

Max. 50 g Propylenoxid wurden bei einem Druck von 2,5 bar innerhalb von 30 Minuten zudosiert. Nach 30 min wurde die Reaktionsmischung auf RT abgekühlt und von Propylenoxid durch Spülen mit Argon befreit

Das Produkt wurde durch eine über GPC bestimmte Molmassenverteilung charakterisiert (Gewichtsmittel).

Die nachfolgende Tabelle gibt die erhaltenen Ergebnisse wieder:

| **Katalysator aus Beispiel Nr.** | **M**_{**w**} **[g/mol]** |
|---|---|
| 1 | 2130 |
| 2 | 1970 |
| 3 | 1940 |
| 4 | 2180 |
| 5 | 2020 |
| 6 | 1920 |
| 7 | 1890 |
| 8 | 1910 |
| 9 | 1900 |
| 10 (Vergleich) | 1310 |

## Patentansprüche

1. Doppelmetallcyanid (DMC)-Katalysator enthaltend
a) mindestens eine Doppelmetallcyanid-Verbindung,
b) mindestens einen organischen Komplexliganden, der kein Coronand ist, und
c) mindestens ein Kronenether.

2. DMC-Katalysator nach Anspruch 1, zusätzlich enthaltend d) Wasser und/oder
e) wasserlösliches Metallsalz.

3. DMC-Katalysator nach Anspruch 1 oder 2, worin die Doppelmetallcyanid-Verbindung a) Zinkhexacyanocobaltat(III) ist.

4. DMC-Katalysator nach einem der Ansprüche 1 bis 3, worin der organische Komplexligand b) tert.-Butanol ist.

5. DMC-Katalysator nach einem der Ansprüche 1 bis 4, worin der Katalysator 1 bis 80 Gew.-% mindestens eines Kronenethers enthält.

6. Verfahren zur Herstellung eines DMC-Katalysators, enthaltend die Schritte
i) Umsetzung in wäßriger Lösung von
α) Metallsalzen mit Metallcyanidsalzen
β) organischen Komplexliganden, die keine Coronanden sind, und
γ) Kronenethern
ii) Isolieren, Waschen und Trocknen des in Schritt i) erhaltenen Katalysators.

7. Verfahren zur Herstellung von Polyetherpolyolen durch Polyaddition von Alkylenoxiden an aktive Wasserstoffatome aufweisenden Starterverbindungen in Gegenwart eines oder mehrerer DMC-Katalysatoren nach einem der Ansprüche 1 bis 5.

## Claims

1. Double metal cyanide (DMC) catalyst comprising
a) at least one double metal cyanide compound,
b) at least one organic complexing ligand which is not a coronand, and
c) at least one crown ether.

2. DMC catalyst according to claim 1, comprising additionally d) water and/or e) water-soluble metal salt.

3. DMC catalyst according to claim 1 or 2, wherein the double metal cyanide compound a) is zinc hexacyanocobaltate(III).

4. DMC catalyst according to any one of claims 1 to 3, wherein the organic complexing ligand b) is tert.-butanol.

5. DMC catalyst according to any one of claims 1 to 4, wherein the catalyst comprises 1 to 80 wt.% of at least one crown ether.

6. Process for the preparation of a DMC catalyst, comprising the steps
i) reaction in aqueous solution of
α) metal salts with metal cyanide salts
β) organic complexing ligands which are not coronands, and
γ) crown ethers,
ii) isolation, washing and drying of the catalyst obtained in step i).

7. Process for the preparation of polyether polyols by the polyaddition of alkylene oxides to starter compounds having active hydrogen atoms in the presence of one or more DMC catalysts according to any one of claims 1 to 5.

## Revendications

1. Catalyseur au cyanure bimétallique (CBM) contenant
a) au moins un composé de cyanure bimétallique;
b) au moins un ligand complexant organique qui n'est pas un coronand et
c) au moins un éther couronne.

2. Catalyseur au CBM selon la revendication 1, contenant par ailleurs d) de l'eau et/ou e) un sel métallique hydrosoluble.

3. Catalyseur au CBM selon l'une des revendications 1 ou 2, dans lequel le composé de cyanure bimétallique a) est un hexacyanocabaltate de zinc (III).

4. Catalyseur au CBM selon l'une des revendications 1 à 3, dans lequel le ligand complexant organique b) est le tert.-butanol.

5. Catalyseur au CBM selon l'une des revendications 1 à 4, dans lequel le catalyseur contient 1 à 80% en poids d'au moins un éther couronne.

6. Procédé de préparation d'un catalyseur au CBM contenant les étapes
i) de mise en réaction dans une solution aqueuse de
α) sels métalliques avec des sels de cyanure métallique
β) des ligands complexants organiques qui ne sont pas des coronands et
γ) des éthers couronnes;
ii) isolation, lavage et séchage du catalyseur obtenue dans l'étape i).

7. Procédé de préparation de polyols de polyéther par polyaddition d'alkylèneoxydes à des composés de départ présentant des atomes d'hydrogène actif en présence d'un ou plusieurs catalyseurs au CBM selon l'une des revendications 1 à 5.
